# EUROPEAN PATENT APPLICATION

(11) **EP 4 633 245 A1**
(43) Date of publication of application: **15.10.2025**
(21) Application number: 23905669.0
(22) Date of filing: 01.12.2023
(51) Int. Cl.: H04W 52/02

(54) **COMMUNICATION METHOD AND APPARATUS**

(30) Priority: 23.12.2022 CN 202211664279
(71) Applicant: Huawei Technologies Co., Ltd., Shenzhen, Guangdong 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN)
(74) Representative: Maiwald GmbH
(86) International application number: PCT/CN2023/135815
(87) International publication number: WO 2024/131502

(57) **Abstract**

A communication method is provided. The method includes: A network device sends, in a first cell, common configurations of M cells and dedicated configurations of N cells of the M cells, where the N cells do not include the first cell; and a terminal device determines cell configurations of the N cells based on the common configurations of the M cells and the dedicated configurations of the N cells. In this manner, the cell configurations of the N cells are compressed, so that signaling overheads of the network device can be reduced, implementing energy saving of the network device.

## Description

### TECHNICAL FIELD

Embodiments of this application relate to the field of wireless communication, and in particular, to a system information sending and receiving method and apparatus, and a storage medium.

### BACKGROUND

In a communication system, a network device implements energy saving by shutting down a radio frequency channel. Shutdown of the radio frequency channel includes a plurality of shutdown modes such as symbol-level shutdown, millisecond-level shutdown, second-level shutdown, and minute-level shutdown. To enable a terminal device to identify the network device, the network device has to send some common signals in each cell, where the common signals are used by the terminal device to identify the network device, or are used by the terminal device to obtain a configuration for accessing the cell. The common signal may be, for example, a system information block (system information block, SIB) 1, and the SIB 1 includes information necessary for the terminal device to access the network device. To ensure that the terminal device can obtain the cell configuration in a timely manner, a periodicity in which the network device sends the SIB 1 is usually configured as 20 milliseconds (ms). Frequent common signal sending results in large overheads. Consequently, the network device cannot implement long-term shutdown of the radio frequency channel, and therefore energy saving cannot be achieved by shutting down the radio frequency channel. Therefore, how to reduce signaling overheads of the common signal and reduce impact on user experience is an urgent problem to be resolved.

### SUMMARY

This application provides a communication method, to reduce overall power consumption of a network device.

In conventional technologies, a network device implements energy saving by shutting down a radio frequency channel. However, the network device has to send some common signals in each cell, where the common signals include necessary information for a terminal device to access the cell. For example, the common signals are used by the terminal device to identify the network device. Consequently, power consumption of the network device is high. In a possible energy saving manner, common signals of a plurality of cells are sent in one cell in a centralized manner, so that overheads for sending common signals by the network device. For example, a network device 1 corresponds to a cell 1, and a network device 2 corresponds to a cell 2. The network device 1 may send common signals of the cell 2 and the cell 1 in a centralized manner, and the network device 2 does not send the common signals. In this way, the network device 2 shuts down a radio frequency channel, to reduce power consumption.

However, when a network device sends common signals of a plurality of cells, signaling overheads of the network device are large. Based on this, this application provides a method for reducing power consumption of a network device.

According to a first aspect, this application provides a communication method. The method may be performed by a terminal device, or may be performed by a component (for example, a chip or a circuit) of the terminal device. This is not limited herein. The method includes: The terminal device receives a first configuration and a second configuration in a first cell, where the first configuration includes first common configurations of M cells, the second configuration includes dedicated configurations of N cells, the N cells are N cells of the M cells, and the N cells do not include the first cell; and the terminal device determines cell configurations of the N cells based on the first configuration and the second configuration, where both M and N are positive integers.

In this manner, compressed configurations of a plurality of cells are sent in the first cell, so that power consumption of a network device can be reduced, implementing energy saving of the network device.

In an optional manner, M is equal to N.

In an optional manner, the first common configuration includes at least one of the following: a frequency range of a downlink carrier; a frequency band of the downlink carrier; a frequency range of an uplink carrier; a frequency band of the uplink carrier; a frequency range of a downlink bandwidth part, where the frequency range of the downlink bandwidth part is included in the downlink carrier; a frequency range of an uplink bandwidth part, where the frequency range of the uplink bandwidth part is included in the frequency range of the uplink carrier; a first downlink data channel transmission configuration, where the first downlink data channel transmission configuration includes a common downlink data transmission configuration for all users in the M cells; a first uplink data channel transmission configuration, where the first uplink data signal transmission configuration includes a common uplink data transmission configuration for all the users in the M cells; uplink and downlink time domain resources, where the uplink and downlink time domain resources include an uplink time domain resource and a downlink time domain resource; or modification duration of the first common configuration, where the modification duration is time between a first time unit and a second time unit, the first time unit is a time unit at which change indication information of the first common configuration is received, and the second time unit is a time unit that is after the first time unit and in which the first common configuration is updated for the first time.

In this manner, communication may be performed by using a same frequency range, for example, downlink communication is performed by using a same downlink carrier, in the M cells. In this way, a problem that spectrum resources are limited in an actual deployment scenario is resolved. In addition, in comparison with transmission of configurations in the M cells respectively, configuring the frequency range for communication in the M cells by using the first common configuration can reduce signaling overheads. In this manner, uplink and downlink time domain resources of the M cells may be further configured to be the same by using the first common configuration, so that interference between uplink communication and downlink communication between cells can be avoided.

In an optional manner, the dedicated configuration includes at least one of the following: a configuration of a random access channel; a downlink control channel configuration associated with the random access channel; or a physical cell identifier PCI.

In this manner, a configuration of a random access channel of each of the M cells is independently configured. A network device may properly and flexibly configure a random access-related parameter based on a quantity of terminal devices that potentially perform random access in each of the N cells and a channel state of a random access channel of each of the N cells.

In an optional manner, the terminal device further receives a third configuration in the first cell, where the third configuration includes second common configurations of the M cells and the first cell; or the third configuration includes second common configurations of the M cells, and the second common configuration includes at least one of the following: a transmission configuration of system information; a downlink control channel configuration associated with the system information; a configuration of a paging control channel; or a downlink control channel configuration associated with the paging control channel.

In this manner, transmission of system information-related configurations and/or paging message-related configurations of the M cells may be performed in the first cell, but not in the M cells. A signal carrying the system information and a paging message is a common signal. Transmission of the third configuration is performed in the first cell, so that signaling overheads for transmission of common signals in the M cells can be reduced.

In an optional manner, at least one of the first configuration, the second configuration, or the third configuration is carried in system information of the first cell; at least one of the first configuration, the second configuration, or the third configuration is carried in first information, the first information is scheduled by using first indication information, and the first indication information is included in system information of the first cell or downlink control information of the first cell; or the system information of the first cell and at least one of the first configuration, the second configuration, or the third configuration are carried in a same piece of signaling.

In an optional manner, the first configuration and the second configuration are carried in a same piece of signaling.

In an optional manner, the first configuration, the second configuration, and the third configuration are all carried in a same piece of signaling.

In an optional manner, the M cells include the N cells and the first cell.

In an optional manner, the first common configuration includes at least one of the following: a frequency range of a downlink carrier; a frequency band of the downlink carrier; a frequency range of an uplink carrier; a frequency band of the uplink carrier; a frequency range of a downlink bandwidth part, where the frequency range of the downlink bandwidth part is included in the frequency range of the downlink carrier; a frequency range of an uplink bandwidth part, where the frequency range of the uplink bandwidth part is included in the frequency range of the uplink carrier; a first downlink data channel transmission configuration, where the first downlink data channel transmission configuration is a common downlink data channel transmission configuration for all users in the M cells; a first uplink data channel transmission configuration, where the first uplink data signal transmission configuration is a common uplink data channel transmission configuration for all the users in the M cells; uplink and downlink time domain resources, where the uplink and downlink time domain resources include an uplink time domain resource and a downlink time domain resource; modification duration of the first common configuration, where the modification duration is a time period between a first time unit and a second time unit, the first time unit is a time unit at which change indication information of the first common configuration is received, and the second time unit is a time unit that is after the first time unit and in which the first common configuration is updated for the first time; a transmission configuration of system information; a downlink control channel configuration associated with the system information; a configuration of a paging control channel; or a downlink control channel configuration associated with the paging control channel.

In an optional manner, the dedicated configuration includes at least one of the following: a configuration of a random access channel; a downlink control channel configuration associated with the random access channel; or a PCI.

In an optional manner, at least one of the first configuration or the second configuration is carried in system information of the first cell; or at least one of the first configuration or the second configuration is carried in first information, the first information is scheduled by using first indication information, and the first indication information is carried in system information of the first cell or downlink control information of the first cell.

In an optional manner, the terminal device sends a first signal in a second cell in the N cells, where the first signal is used for waking up a network device corresponding to the second cell.

In an optional manner, the terminal device sends a first signal in one of the N cells, where the first signal is used for triggering a random access procedure.

According to a second aspect, this application provides a communication method. The method may be performed by a first network device, or may be performed by a component (for example, a chip or a circuit) of the first network device. This is not limited herein. The method includes: The network device sends a first configuration and a second configuration in a first cell, where the first configuration includes first common configurations of M cells, the second configuration includes dedicated configurations of N cells, the N cells are N cells of the M cells, and the N cells do not include the first cell.

In an optional manner, M is equal to N.

In an optional manner, the network device sends a third configuration, where the third configuration includes second common configurations of the M cells and the first cell; or the third configuration includes second common configurations of the M cells.

In an optional manner, the M cells include the N cells and the first cell.

In an optional manner, the network device receives a first signal in a second cell in the N cells, where the first signal is used for triggering a random access procedure.

For descriptions of some optional implementations in the second aspect, refer to related content in the first aspect. Details are not described again.

For beneficial effects of any one of the manners of the second aspect, refer to the descriptions in the first aspect. Details are not described herein again.

According to a third aspect, a communication apparatus is provided. The communication apparatus may be the terminal device in method embodiments provided in the first aspect, or may be a chip used in the terminal device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or by executing code instructions, the communication apparatus to perform the method performed by the terminal device in the foregoing method embodiments.

According to a fourth aspect, a communication apparatus is provided. The communication apparatus may be the network device in the foregoing method embodiments provided in the second aspect, or may be a chip used in the network device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or executing code instructions, the communication apparatus to perform the method performed by the network device in the foregoing method embodiments.

According to a fifth aspect, this application provides a computer-readable storage medium. The computer-readable storage medium stores instructions. When the instructions are executed by a communication apparatus, the method performed by the terminal device in the first aspect is performed, or the method performed by the network device in the second aspect is performed.

According to a sixth aspect, this application provides a computer program product. The computer program product includes a computer program. When the computer program is run, the method performed by the terminal device in the first aspect is performed, or the method performed by the network device in the second aspect is performed.

According to a seventh aspect, this application provides a chip system. The chip system includes a processor, configured to implement functions of the terminal device in the method according to the first aspect, or configured to implement functions of the network device in the method according to the second aspect. In a possible design, the chip system further includes a memory, configured to store program instructions and/or data. The chip system may include a chip, or may include a chip and another discrete component.

According to an eighth aspect, this application provides a communication system, including at least one communication apparatus in the fourth aspect, at least one communication apparatus in the fifth aspect, and at least one communication apparatus in the sixth aspect.

According to a ninth aspect, this application provides a communication method, including: A network device sends a first configuration and a second configuration to a terminal, where the first configuration includes first common configurations of M cells, the second configuration includes dedicated configurations of N cells, the M cells include the N cells, and the N cells do not include the first cell; and the terminal device determines cell configurations of the N cells based on the first configuration and the second configuration.

### BRIEF DESCRIPTION OF DRAWINGS

FIG. 1 is a diagram of an architecture of a mobile communication system to which an embodiment of this application is applied;
FIG. 2 is a diagram of an SSB in time domain and frequency domain according to this application;
FIG. 3 is a diagram of a scenario according to this application;
FIG. 4 is a diagram of a communication method according to this application;
FIG. 5 is a diagram of a communication apparatus according to this application; and
FIG. 6 is a diagram of another communication apparatus according to this application.

### DESCRIPTION OF EMBODIMENTS

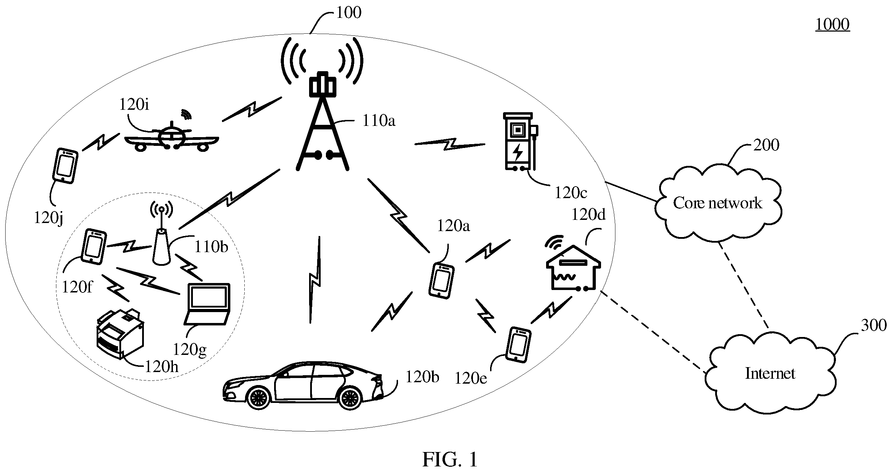

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. The access network device may be referred to as a network device for short. FIG. 1 is merely a diagram. The communication system may further include other network devices, for example, may further include a wireless relay device and a wireless backhaul device, which are not shown in FIG. 1.

The radio access network device, or the network device, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or unit that implements a part of functions of the base station, for example, may be a central unit (central unit, CU) or a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete some or all of physical layer functions. For a detailed description of the foregoing protocol layers, reference may be made to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the network device is a radio access network device.

A terminal may also be referred to as a terminal device (terminal device), a user equipment (user equipment, UE), a mobile station, a mobile terminal, or the like. The terminal may be a mobile phone, a tablet computer, a computer having a wireless transceiver function, a wearable device, a vehicle, an uncrewed aerial vehicle, a helicopter, an aircraft, a ship, a robot, a robotic arm, a smart home device, a wireless modem (modem), a computing device, another processing device connected to a wireless modem, an augmented reality (augmented reality, AR) device, a virtual reality (virtual reality, VR) device, an artificial intelligence (artificial intelligence, AI) device, or the like. The terminal may further include a subscriber unit (subscriber unit), a cellular phone (cellular phone), a smartphone (smartphone), a wireless data card, a personal digital assistant (personal digital assistant, PDA) computer, a tablet computer, a netbook computer, a handheld (handheld) device, a laptop computer (laptop computer), a cordless phone (cordless phone) or a wireless local loop (wireless local loop, WLL) station, a machine type communication (machine type communication, MTC) terminal, a relay user equipment, or the like. The relay user equipment may be, for example, a residential gateway (residential gateway, RG). For ease of description, in this application, the devices mentioned above are collectively referred to as terminals.

The terminal may be widely used in various scenarios, for example, device-to-device (device-to-device, D2D) communication, vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city.

A specific technology and a specific device form used by the terminal are not limited in embodiments of this application.

The network device and the terminal may be at a fixed location or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal device 120j that accesses the radio access network 100 via 120i, the terminal 120i is a network device. However, for the network device 110a, 120i is a terminal, that is, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. A function of the terminal may be performed by a module (for example, a chip or a modem) in the terminal, or may be performed by an apparatus including the function of the terminal.

In this application, the network device sends a downlink signal or downlink information to the terminal, where the downlink information is carried on a downlink channel; and the terminal sends an uplink signal or uplink information to the network device, where the uplink information is carried on an uplink channel.

The following explains and describes some nouns or terms in this application.

### 1. Control resource set (control resource set, CORESET) and search space (search space, SS) set

The CORESET indicates a frequency domain location of a physical downlink control channel (physical downlink control channel, PDCCH) and a quantity of time domain symbols occupied by the PDCCH in time domain. A network device may preconfigure different identifiers for CORESETs, to distinguish between different control resource sets.

Each SS set may be associated with one CORESET. The SS set may be a common search space (common search space, CSS) set or a user equipment specific search space (user equipment specific search space, USS) set. CSS is used for transmission of cell-level common control information related to a broadcast control channel (broadcast control channel, BCCH), paging, a random access procedure, and the like. USS is used for transmission of terminal-level control information related to a downlink shared channel (downlink-shared channel, DL-SCH), an uplink shared channel (uplink shared channel, UL-SCH), and the like. Specifically, the network device may determine different identifiers for SS sets in advance, to distinguish between different SS sets.

### 2. Cell (Cell) and physical cell identifier (physical cell identify, PCI)

One cell corresponds to one coverage area of a radio signal of the network device and a frequency domain resource of one carrier. To communicate with the network device, a terminal needs to establish a wireless connection to a cell of the network device. The terminal may uniquely identify a cell by using a cell identifier. In this application, the cell identifier may be a PCI.

### 3. Common signal

To enable the terminal to identify the network device, the network device needs to send some common signals in each cell. These common signals are used by the terminal to identify the network device or include information necessary for the terminal to access the cell. For example, the common signal includes a cell configuration, and the cell configuration is a configuration that needs to be learned for accessing the cell. The common signal may be, for example, a synchronization signal and PBCH block (synchronization signal and PBCH block, SSB), system information, or a paging message.

The network device pages a terminal in a coverage area by using the paging message, and the terminal learns of the cell configuration by receiving the SSB and the system information. The following separately describes the SSB and a SIB in detail.

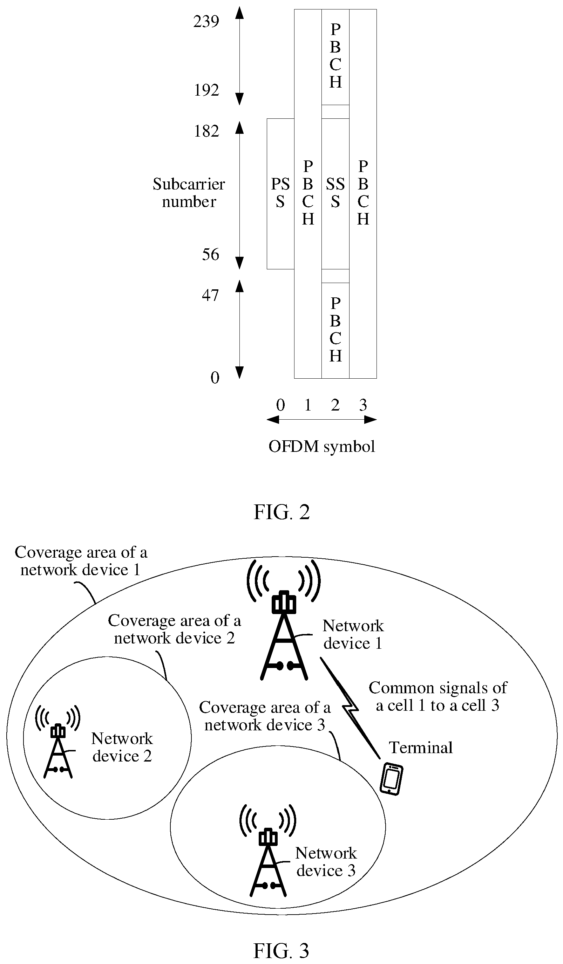

The SSB may include two parts: a synchronization signal (synchronization signal, SS) and a physical broadcast channel (physical broadcast channel block, PBCH). The SS may include a primary synchronization signal (primary synchronization signal, PSS) and a secondary synchronization signal (secondary synchronization signal, SSS). The PBCH is used for transmission of a master information block (master information block, MIB). The MIB is a part of the system information, and the MIB may include information such as a system frame number and whether access to a cell is barred. FIG. 2 is a diagram of an SSB in time domain and frequency domain. In FIG. 2, the SSB may occupy four consecutive symbols in time domain, and may occupy 20 resource blocks (resource blocks, RBs), that is, 240 subcarriers (subcarriers, SCs) in frequency domain.

The SSB may be used for implementing the following functions: (1) cell synchronization and MIB obtaining; and (2) beam training on a side of a network device.

System information includes a MIB and a system information block (system information block, SIB). The SIB includes a SIB 1, a SIB 2, and the like. System information blocks other than the SIB 1 may be referred to as other system information blocks (other system information blocks, other SIBs) for short. A main function of the SIB 1 is to complete a configuration on a primary cell (primary cell, PCell), so that a terminal in an idle (idle) state monitors a paging message, or the terminal completes uplink timing synchronization through random access, to enter a connected (connected) state.

The SIB 1 is usually carried on a physical downlink data channel (physical downlink shared channel, PDSCH). Generally, the network device may indicate, to the terminal by using downlink control information (downlink control information, DCI), a time-frequency location and a transmission parameter of the PDSCH carrying the SIB 1. A candidate time domain location and a candidate frequency domain location of the DCI may be indicated by using the MIB. For example, the MIB includes a 4-bit (bit) control resource set zero (control resource set zero, CORESET0) and a 4-bit common search space zero (common search space zero, CSS0). The CORESET0 indicates the candidate frequency domain location of the DCI for scheduling the SIB 1, and the CSS0 indicates the candidate time domain location of the DCI for scheduling the SIB 1. The network device may send, by using a beam that is the same as a beam for sending the SSB, the SIB 1 corresponding to the SSB. Correspondingly, when receiving the SIB 1, the terminal may receive, by using a beam that is the same as a beam for receiving the SSB, the SIB 1 corresponding to the SSB. The SIB 1 corresponding to the SSB represents that the MIB in the SSB indicates a frequency domain location and a time domain location of the DCI for scheduling the SIB 1.

In a possible understanding, the SIB 1 may be considered as remaining minimum system information (remaining minimum system information, RMSI); the SIB 1 may be considered as the 1^{st} system information sent after the MIB; the SIB 1 may be considered as system information including time-frequency resource indication information of a physical random access channel (physical random access channel, PRACH); or the SIB 1 may be considered as information carried in a PDSCH scheduled through a PDCCH that is determined based on the CORESET0 and the CSS0.

### 4. Carrier

The terminal performs communication in a cell by using a carrier configured for the cell. The carrier may be understood as a segment of consecutive frequency domain resources. A carrier used for uplink communication in a cell may be referred to as an uplink carrier, and a carrier used for downlink communication in a cell may be referred to as a downlink carrier. For a cell in a time division duplex (time division duplex, TDD) mode, an uplink carrier and a downlink carrier are a same carrier. For a cell in a frequency division duplex (frequency division duplex, FDD) mode, an uplink carrier and a downlink carrier are different carriers.

### 5. Bandwidth part (bandwidth part, BWP)

As a bandwidth of a carrier becomes larger, costs and power consumption of using an entire bandwidth of the carrier by the terminal also increase. When there is no need for high data volume transmission, the terminal does not need to use the entire bandwidth of the carrier, but uses a part of the entire bandwidth, which is referred to as a BWP for short. The BWP is a segment of consecutive spectrum resources in the carrier, or a part of spectrum resources of the carrier. By configuring the bandwidth part, the terminal may communicate with the network device by using a bandwidth smaller than the carrier bandwidth.

The network device may implement energy saving in a form of shutting down a radio frequency channel (referred to as a shutdown mode for short below). When the network device is in the shutdown mode, the network device does not receive or send a signal. Longer shutdown time indicates a more significant energy saving effect of the network device. To save energy of the network device, in an optional manner, the network device sends common signals of a plurality of cells in one cell in a centralized manner, to reduce overheads for sending common signals by the network device, thereby reducing power consumption of the network device. For example, the terminal is located in a coverage area of a cell 1, common signals of the cell 1 to a cell 3 are sent in the cell 1 in a centralized manner, and the common signals are not sent in the cell 2 or the cell 3, so that energy saving of the network device is implemented. The cell 1 to the cell 3 may respectively correspond to a network device 1, a network device 2, and a network device 3. Alternatively, the cell 1, the cell 2, and the cell 3 correspond to a same network device. Alternatively, the cell 1 corresponds to a network device 1, and the cell 2 and the cell 3 correspond to a network device 2. FIG. 3 shows a scenario in this application. In FIG. 3, a cell 1 to a cell 3 respectively correspond to a network device 1 to a network device 3. For example, a common signal is a SIB 1, and a terminal may obtain SIBs 1 of the cell 2 and the cell 3 from the cell 1. Transmission of the SIB 1 is not performed in the cell 2 or the cell 3. For another example, a common signal is a paging message, and the network device may not send the paging message in the cell 2 or the cell 3, and send the paging message only in the cell 1 to page a terminal.

However, the network device sends common signals of a plurality of cells in one cell in a centralized manner, resulting in a multiple increase in overheads of common signals transmitted in the cell. For example, SIB 1 overheads of one cell are about 1k to 1.2k bits. If transmission of SIBs 1 of six cells is performed in one cell, total SIB 1 overheads of the six cells are about 6k to 6.2k bits, which is a 6-fold increase. Because overheads for sending common signals of a plurality of cells in one cell by a network device in a centralized manner are large, this application provides an energy saving method for a network device. Compressed common signals of a plurality of cells are sent in one cell in a centralized manner, to implement energy saving of the network device while ensuring user experience.

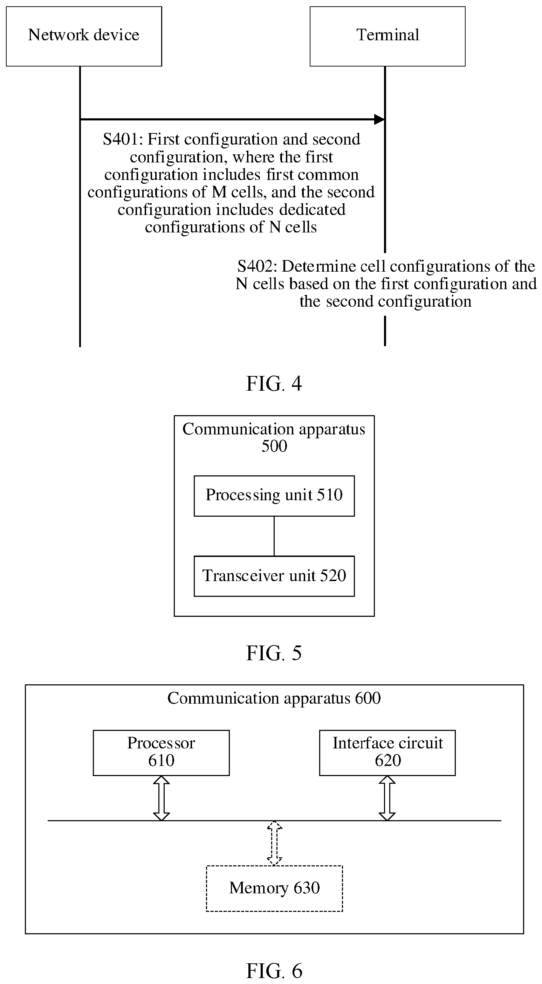

A communication method provided in this application is described in detail with reference to FIG. 4.

S401: A network device sends a first configuration and a second configuration in a first cell, and correspondingly, a terminal receives the first configuration and the second configuration in the first cell.

Specifically, the first configuration includes first common configurations of M cells, the second configuration includes dedicated configurations of N cells, the N cells are N cells of the M cells, and the N cells do not include the first cell. Both M and N are positive integers, and M is greater than or equal to N. In this application, receiving or sending in the first cell means receiving or sending by using a resource of the first cell. The resource of the first cell includes a time domain resource, a frequency domain resource, a space domain resource, and the like.

S402: The terminal determines cell configurations of the N cells based on the first configuration and the second configuration.

In this manner, when transmission of cell configurations of a plurality of cells is performed in the first cell in a centralized manner, cell configurations of the M cells are classified into common configurations and dedicated configurations, so that cell configuration information of the M cells is compressed, thereby reducing signaling overheads of the network device.

Specifically, the first common configuration may be understood as a same configuration of the M cells. For example, the first common configuration may include a configuration parameter A, and a value of the parameter A is V. In other words, values of parameters A of the M cells are all V.

The dedicated configurations of the N cells may be understood as that the N cells respectively correspond to N configurations, and the N configurations may be the same or may be different. For example, the N cells include a cell 1 to a cell N, and the dedicated configurations of the N cells may include configuration parameters B, or each of the N cells includes a configuration parameter B. A value of a configuration parameter B of the cell 1 is K₁, a value of a configuration parameter B of the cell 2 is K₂, ..., and a value of a configuration parameter B of the cell N is K_{N}, where K₁ to K_{N} may be the same or may be different. For example, if the dedicated configuration includes a PCI, or the configuration parameter B is the PCI, the dedicated configurations of the M cells include a PCI₁ of the cell 1 to a PCI_{N} of the cell N.

S401 is implemented in two optional manners. Manner 1: M is equal to N, the first configuration includes the common configurations of the M cells, and the second configuration includes the dedicated configurations of the M cells. Manner 2: M is greater than N, the M cells include the first cell, and the N cells do not include the first cell. The following describes the two optional manners in detail.

Manner 1: M is equal to N. In this manner, the first configuration includes the first common configurations of the M cells, the second configuration includes the dedicated configurations of the M cells, and the M cells do not include the first cell.

In an optional manner, the first common configuration includes at least one of the following: a frequency range of a downlink carrier; a frequency band of the downlink carrier; a frequency range of an uplink carrier; a frequency band of the uplink carrier; a frequency range of a downlink BWP; a frequency range of an uplink BWP; a first downlink data channel transmission configuration; a first uplink data channel transmission configuration; or modification duration of the first common configuration. That the first common configuration includes at least one of the foregoing content may also be understood as that the first common configuration indicates at least one of the foregoing content. For example, the first common configuration may include one or more pieces of configuration information, and the one or more pieces of configuration information in the first common configuration indicate at least one of the foregoing content.

The following separately describes parameters that may be included in the first common configuration.

The first common configuration includes the frequency domain range of the downlink carrier. Because the first common configuration is the same configuration of the M cells, frequency ranges of downlink carriers corresponding to the M cells are the same; or the M cells correspond to a same downlink carrier. Optionally, the first common configuration includes configuration information indicating a start frequency of the downlink carrier and configuration information indicating a bandwidth of the downlink carrier. For example, the first common configuration may include configuration information indicating an offset of the start frequency of the downlink carrier relative to a point A and configuration information indicating an actual frequency range of the downlink carrier in one or more subcarrier spacings. Alternatively, the first common configuration may include configuration information indicating an offset of a start frequency of the downlink carrier relative to a frequency of a point A in one or more subcarrier spacings and configuration information indicating a bandwidth of the downlink carrier in one or more subcarrier spacings. For example, the first common configuration includes an information element offsetToPointA and an information element scs-SpecificCarrierList. For detailed descriptions of the information element offsetToPointA and the information element scs-SpecificCarrierList, refer to content in section 6.3.2 of the 3GPP protocol 38.331 V17.2.0. Details are not described.

The first common configuration includes the frequency band of the downlink carrier. For example, the first common configuration includes an information element frequencyBandList. The information element frequencyBandList is for configuring one or more frequency bands to which the downlink carrier belongs. For detailed descriptions of the information element frequencyBandList, refer to content in section 6.3.2 of the 3GPP protocol 38.331 V17.2.0. Details are not described.

The first common configuration includes the frequency domain range of the uplink carrier. Because the M cells correspond to the first common configurations, frequency ranges of uplink carriers corresponding to the M cells are the same; or the M cells correspond to a same uplink carrier. Optionally, the first common configuration includes configuration information indicating a start frequency of the uplink carrier and configuration information indicating a bandwidth of the uplink carrier. For example, the first common configuration includes configuration information indicating an offset of the start frequency of the uplink carrier relative to a frequency of a point A and configuration information indicating an offset of a start frequency of the uplink carrier relative to a frequency of the point A in one or more subcarrier spacings. Alternatively, the first common configuration includes configuration information indicating a bandwidth and an offset of a start frequency of the uplink carrier relative to a frequency of a point A in one or more subcarrier spacings. For example, the first common configuration includes an information element offsetToPointA and an information element scs-SpecificCarrierList. For detailed descriptions of the information element offsetToPointA and the information element scs-SpecificCarrierList, refer to content in section 6.3.2 of the 3GPP protocol 38.331 V17.2.0. Details are not described. It should be noted that, in a TDD system, a frequency range of an uplink carrier is the same as that of a downlink carrier. In other words, in the time division duplex system, the frequency domain range of the uplink carrier included in a first common configuration is the same as the frequency range of the downlink carrier included in a first configuration. Therefore, in the TDD system, the first common configuration may include a frequency domain range of only one carrier, and a terminal determines the frequency range of the uplink carrier and the frequency range of the downlink carrier based on the frequency range of the carrier.

The first common configuration includes the frequency band of the uplink carrier. For example, the first common configuration includes an information element frequencyBandList. The information element frequencyBandList is used for configuring one or more frequency bands to which the uplink carrier belongs. Optionally, when the frequency band of the uplink carrier is configured by using the first common configuration, a group of additional maximum transmit power values and a group of additional out-of-band leakage values that correspond to the uplink carrier may be further configured.

The first common configuration includes the frequency domain range of the downlink BWP. The frequency range of the downlink BWP is included in the frequency range of the downlink carrier. It should be understood that, because the M cells correspond to the first common configurations, that the M cells correspond to a same frequency range of a downlink BWP may also be understood as that the M cells correspond to a same downlink BWP. Optionally, the first common configuration includes configuration information of a start frequency and a bandwidth of the downlink BWP in the downlink carrier.

Optionally, the downlink BWP may be an initial downlink BWP, and the initial downlink BWP may be understood as a downlink BWP used by the terminal during initial access. Further, the first common configuration may include configuration information indicating whether an extended cyclic prefix is used for the downlink BWP of the M cells. For example, the first common configuration may include an information element cyclicPrefix. The information element cyclicPrefix indicates whether the extended cyclic prefix is used for the downlink BWP. For detailed descriptions of the information element cyclicPrefix, refer to content in section 6.3.2 of the 3GPP protocol 38.331 V17.2.0. Details are not described.

The first common configuration includes the frequency domain range of the uplink BWP. The frequency range of the uplink BWP is included in the frequency range of the uplink carrier. Because the M cells correspond to the first common configurations, frequency ranges of uplink BWPs corresponding to the M cells are the same; or the M cells correspond to a same uplink BWP. In an optional manner, the first common configuration includes configuration information indicating a start frequency and a bandwidth of the uplink BWP in the uplink carrier. Optionally, the bandwidth of the uplink BWP may be indicated at a granularity of resource block. Because there are a plurality of subcarrier spacings, and the uplink BWP includes different quantities of resource blocks in different subcarrier spacings, the first common configuration may further include configuration information indicating a subcarrier spacing corresponding to the uplink BWP. The first common configuration indicates the subcarrier spacing of the uplink BWP, so that the terminal determines the bandwidth of the uplink BWP. For example, the first common configuration may include an information element locationAndBandwidth and an information element subcarrierSpacing. For detailed descriptions of the information element locationAndBandwidth and the information element subcarrierSpacing, refer to content in section 6.3.2 of the 3GPP protocol 38.331 V17.2.0. Details are not described.

The first common configuration includes the first downlink data channel transmission configuration. Optionally, the first downlink data transmission configuration includes configuration information indicating a time domain resource allocation table. The time domain resource allocation table may be a time domain resource allocation table used by the terminal on the initial downlink BWP. For example, the terminal receives downlink control information, and the downlink control information indicates a time domain resource of a PDSCH by indicating an index in the time domain resource allocation table.

That the first common configuration includes uplink and downlink time domain resources may also be understood as that the first common configuration indicates time domain resources that are used for uplink communication and that are of the M cells and time domain resources that are used for downlink communication and that are of the M cells. It should be understood that, because the M cells correspond to the first common configurations, the M cells correspond to a same time domain resource used for uplink communication and a same time domain resource used for downlink communication. Optionally, the first common configuration may include at least one of the following: a first uplink-downlink configuration pattern, a second uplink-downlink configuration pattern, or a reference subcarrier spacing of a first uplink-downlink time domain configuration. The first uplink-downlink configuration pattern may include an uplink-downlink configuration pattern periodicity, a quantity of uplink slots in the periodicity, a quantity of uplink symbols after the uplink slots, a quantity of downlink slots in the periodicity, and a quantity of downlink symbols before the downlink slots. The second uplink-downlink configuration pattern may include an uplink-downlink slot configuration periodicity, a quantity of uplink slots in the periodicity, a quantity of uplink symbols after the uplink slots, a quantity of downlink slots in the periodicity, and a quantity of downlink symbols before the downlink slots. Optionally, the first common configuration includes a time division duplex uplink-downlink common configuration (TDD-UL-DL-ConfigCommon) information element. For detailed descriptions of the information element TDD-UL-DL-ConfigCommon, refer to content in section 6.3.2 of the 3GPP protocol 38.331 V17.2.0. Details are not described.

In an actual deployment scenario, because spectrum resources are limited, the M cells may use a same downlink carrier, a same downlink BWP in a same downlink carrier, a same uplink carrier, and/or a same uplink BWP in a same downlink carrier. Therefore, frequency ranges of downlink carriers, frequency bands of downlink carriers, frequency ranges of uplink carriers, frequency bands of uplink carriers, downlink BWPs, and/or uplink BWPs of the M cells may be notified to the terminal by using the first common configuration, and the foregoing parameters of each of the M cells do not need to be separately notified, thereby avoiding signaling redundancy and reducing signaling overheads.

That the first common configuration includes the modification duration of the first common configuration may also be understood as that the first common configuration indicates the modification duration of the first common configuration. The modification duration is time between a first time unit and a second time unit, the first time unit is a time unit at which change indication information of the first common configuration is received, and the second time unit is a time unit that is after the first time unit and in which the first common configuration is updated for the first time. The modification duration of the first common configuration may also be understood as effective time of modification of the first common configuration. Optionally, the first common configuration includes an information element modificationPeriodCoeff, and the information element modificationPeriodCoeff indicates the modification duration of the first common configuration. For detailed descriptions of the information element modificationPeriodCoeff, refer to content in section 6.3.2 of the 3GPP protocol 38.331 V17.2.0. Details are not described.

In an optional manner, the dedicated configurations of the M cells include at least one of the following: a configuration of a random access channel; a control channel configuration associated with the random access channel; or a PCI. In other words, the dedicated configurations of the M cells may include at least one of a configuration of a random access channel of each of the M cells; a control channel configuration associated with the random access channel of each of the M cells; or a PCI of each of the M cells.

That the dedicated configurations of the M cells include at least one of the foregoing content may also be understood as that the dedicated configurations of the M cells indicate at least one of the foregoing content. For example, the dedicated configurations of the M cells include one or more pieces of configuration information, and the one or more pieces of configuration information included in the dedicated configurations of the M cells indicate at least one of the foregoing content.

The following separately describes parameters that may be included in the dedicated configurations of the M cells.

The dedicated configurations of the M cells include configurations of random access channels, and the configuration of the random access channel may include at least one of the following: configuration information indicating a time domain resource of the random access channel; configuration information indicating a frequency domain resource of the random access channel; configuration information indicating a preamble type of the random access channel; or configuration information indicating an uplink power control configuration of the random access channel. For example, the configuration information indicating the time domain resource of the random access channel may be configuration information indicating a configuration pattern of a random access channel occasion (random access channel occasion, RO), and the configuration information indicating the frequency domain resource of the random access channel may be configuration information indicating a quantity of ROs for frequency division multiplexing of the random access channel.

The dedicated configurations of the M cells include control channel configurations associated with the random access channels. A control channel associated with the random access channel may be used for transmission of downlink control information, the downlink control information may be used for scheduling a second message, and the second message carries information needed by the terminal in a random access procedure. For example, the control channel associated with the random access channel may be a PDCCH, and the DCI in the PDCCH is used for scheduling transmission of the second message. The second message may include a random access response (random access response, RAR) in the random access procedure. Optionally, the control channel configuration associated with the random access channel includes configuration information used for configuring an SS set of the control channel associated with the random access channel, and configuration information used for configuring a CORESET of the control channel associated with the random access channel. For example, the control channel configuration associated with the random access channel includes an information element ra-SearchSpace. For detailed descriptions of the information element ra-SearchSpace, refer to content in section 6.3.2 of the 3GPP protocol 38.331 V17.2.0. Details are not described.

It should be understood that one terminal may perform a random access procedure in one of the M cells. Because a quantity of terminals in each cell may vary, random access configurations and random access-related configurations of the M cells may be independently configured. The configuration of the random access channel of each cell and the control channel configuration associated with the random access channel are independently configured by using the dedicated configurations of the M cells, to achieve a proper and flexible random access channel configuration, and improve random access efficiency of the terminal.

Optionally, the first configuration may be included in system information of the first cell. In other words, system information of the first cell indicates the common configurations of the M cells. Alternatively, the first configuration may be carried in first information, the first information is scheduled by using first indication information, and the first indication information may be included in system information of the first cell; or the first indication information may be included in downlink control information of the first cell. Alternatively, the first configuration is carried in second information, and the second information further includes system information of the first cell.

Optionally, the second configuration may be included in system information of the first cell. In other words, the system information of the first cell indicates the dedicated configurations of the M cells. Alternatively, the second configuration may be carried in first information, the first information is scheduled by using first indication information, and the first indication information may be included in system information of the first cell or downlink control information of the first cell. Alternatively, the second configuration is carried in second information, and the second information further includes system information of the first cell. Optionally, the first configuration and the second configuration are carried in a same piece of signaling.

In Manner 1, the first configuration includes the first common configurations of the M cells. In an optional manner, the method in FIG. 4 may further include: The network device sends a third configuration to the terminal in the first cell, and correspondingly, the terminal receives the third configuration in the first cell.

Specifically, the third configuration includes second common configurations of the M cells and the first cell; or the third configuration includes second common configurations of the M cells.

The second common configuration includes at least one of the following: a transmission configuration of system information; a downlink control channel configuration associated with the system information; a configuration of a paging control channel; or a downlink control channel configuration associated with the paging control channel.

In this manner, transmission of transmission configurations of system information, downlink control channel configurations associated with the system information, configurations of paging control channels, or downlink control channel configurations associated with the paging control channels of the M cells may be performed in the first cell, so that power consumption of the network device for transmission of the foregoing signals in the M cells is reduced. When the second common configurations are common configurations of the first cell and the M cells, the second common configuration may further include configuration information of the first cell, to further reduce power consumption of the network device.

In a possible implementation, the transmission configuration of the system information may include one or more of the following: a periodicity of system information transmission, a repetition periodicity of system information transmission, or a transmission pattern of the system information in a periodicity. The transmission pattern of the system information in the periodicity indicates one or more time periods, the one or more time periods are included in the periodicity of the system information, system information transmission exists in the one or more time periods, and system information transmission does not exist in a time period other than the one or more time periods in the periodicity of the system information. In other words, the transmission pattern of the system information in the periodicity is a set of time periods in which system information transmission exists in the periodicity of the system information.

In a possible implementation, the downlink control channel configuration associated with the system information includes configuration information used for configuring an SS set and configuration information used for configuring a CORESET. For example, the downlink control channel configuration associated with the system information includes an information element searchSpaceZero. For detailed descriptions of the information element searchSpaceZero, refer to content in section 6.3.2 of the 3GPP protocol 38.331 V17.2.0. Details are not described.

In a possible implementation, the configuration of the paging control channel includes configuration information indicating a paging occasion (paging occasion, PO). The configuration of the paging control channel may include one or more of the following: configuration information indicating a paging periodicity, configuration information indicating a paging frame in the paging periodicity, configuration information indicating a PO in the paging frame, and configuration information indicating a 1^{st} PDCCH detection occasion used for paging in the PO. For example, the paging control channel includes an information element defaultPagingCycle, an information element nAndPagingFrameOffset, an information element ns, and an information element firstPDCCH-MonitoringOccasionOfPO. For detailed descriptions of the information element defaultPagingCycle, the information element nAndPagingFrameOffset, the information element ns, and the information element firstPDCCH-MonitoringOccasionOfPO, refer to content in section 6.3.2 of the 3GPP protocol 38.331 V17.2.0. Details are not described.

In a possible implementation, the downlink control channel configuration associated with the paging control channel may include configuration information of an SS set of a control channel associated with the paging control channel, and configuration information of a CORESET of the control channel associated with the paging control channel. For example, configuration information of the control channel associated with the paging control channel is an information element pagingSearchSpace. For detailed descriptions of the information element pagingSearchSpace, refer to content in section 6.3.2 of the 3GPP protocol 38.331 V17.2.0. Details are not described.

Uplink carriers corresponding to the M cells are the same, or downlink carriers corresponding to the M cells are the same. In an optional manner, the uplink carriers of the M cells are different from an uplink carrier of the first cell, and/or the downlink carriers of the M cells are different from a downlink carrier of the first cell.

Optionally, the third configuration and the first configuration may be carried in same information.

Optionally, the third configuration may be included in the system information of the first cell. In other words, the system information of the first cell indicates the second common configurations of the M cells or indicates the common configurations of the M cells and the first cell. Alternatively, the third configuration may be carried in the first information. The first information is scheduled by using the first indication information. For example, the first indication information indicates a time domain resource and a frequency domain resource that carry the first information. Alternatively, the third configuration is carried in the second information, and the second information further includes the system information of the first cell.

Optionally, in an implementation in which the first indication information is the downlink control information of the cell, the terminal may further receive a fourth configuration in the first cell, and the fourth configuration is used for configuring a time domain resource and a frequency domain resource that carry the first indication information. For example, the fourth configuration indicates a search space set used for carrying the first indication information. Optionally, the fourth configuration may be included in the system information of the first cell. Alternatively, the fourth configuration and the system information of the first cell are carried in a same piece of signaling.

In an optional manner, the system information of the first cell described in this application may be a MIB of the first cell, a SIB 1 of the first cell, or other SIBs of the first cell.

In an example, the first configuration, the second configuration, and the third configuration may be included in the SIB 1 of the first cell. In this example, when the third configuration is the common configurations of the first cell and the M cells, because the third configuration also includes information necessary for the terminal to access the first cell, the third configuration may be directly included in the SIB 1 of the first cell. In addition, because the terminal needs to obtain third configuration information by using the SIB 1 of the first cell, the first configuration and the second configuration are both included in the SIB 1 of the first cell, so that the terminal can obtain the first configuration and the second configuration more quickly.

In another example, the third configuration may be included in the SIB 1 of the first cell, and the first configuration and the second configuration may be included in other system information of the first cell; or the third configuration may be included in the SIB 1 of the first cell, and the first configuration and the second configuration may be included in the first information. In this example, when the third configuration is the common configurations of the first cell and the M cells, the third configuration includes information necessary for the terminal to access the first cell, and therefore the third configuration may be directly included in the SIB 1 of the first cell. In addition, because transmission performance of the SIB 1 of the first cell is related to a size of the SIB 1, if the first configuration and the second configuration are directly included in the SIB 1 of the first cell, the transmission performance of the SIB 1 of the first cell may be reduced. Therefore, considering the transmission performance of the SIB 1 of the first cell, the first configuration and the second configuration may be included in other system information or the first information other than the SIB 1.

In Manner 1, optionally, the method in FIG. 4 further includes S403: The terminal sends a first signal in a second cell in the M cells.

Because transmission of the cell configurations of the M cells is performed in the first cell, after the terminal learns of the cell configurations of the M cells,
the terminal may select one of the cells for access. The first signal is used for triggering a random access procedure; or the first signal is used for establishing a connection between the terminal and the second cell.

In an optional manner, transmission of common signals of the M cells is performed in the first cell, network devices corresponding to the M cells are in a sleep state, and the first signal is an uplink wake-up signal. After receiving the first signal, the network device may change from the sleep state to an active state, to communicate with the terminal. For example, after receiving the first signal, a network device corresponding to the second cell may receive a random access preamble sent by the terminal. Correspondingly, after sending the first signal in the second cell, the terminal may send the random access preamble to the second cell.

In another optional manner, the first signal is a random access preamble or a PRACH. In other words, after learning of the cell configurations of the M cells, the terminal directly sends a random access signal in the second cell. Optionally, after receiving the first signal, the network device may send a RAR to the terminal device. Correspondingly, after sending the first signal in the second cell, the terminal may receive the RAR in the second cell.

In Manner 1, the first cell and the M cells may correspond to a same network device, or may respectively correspond to different network devices. For example, M is equal to 2, the M cells include the second cell and a third cell, and the first cell to the third cell may all correspond to a same network device. Alternatively, the first cell to the third cell respectively correspond to three different network devices. Alternatively, the first cell corresponds to a first network device, and the second cell and the third cell correspond to a second network device.

In Manner 1, transmission of the cell configurations of the M cells is performed in the first cell, and the cell configurations of the M cells are compressed by using the common configurations, so that overheads of the network device can be reduced.

Manner 2 is described below: M is greater than N, in other words, the M cells include the N cells, and further include cells other than the N cells. In this manner, the first configuration includes the first common configurations of the M cells, and the second configuration includes the dedicated configurations of the N cells. The N cells are N cells of the M cells, the M cells include the N cells and the first cell, and the N cells do not include the first cell.

In an optional manner, the first common configuration includes at least one of the following: a frequency range of a downlink carrier; a frequency band of the downlink carrier; a frequency range of an uplink carrier; a frequency band of the uplink carrier; a frequency range of a downlink bandwidth part; a frequency range of an uplink bandwidth part; a first downlink data channel transmission configuration; a first uplink data channel transmission configuration; modification duration of the first common configuration; a transmission configuration of system information; a downlink control channel configuration associated with the system information; a configuration of a paging control channel; or a downlink control information configuration associated with the paging control channel.

That the first common configuration includes at least one of the foregoing content may also be understood as that the first common configuration indicates at least one of the foregoing content. For example, the first common configuration may include one or more pieces of configuration information, and the one or more pieces of configuration information in the first common configuration indicate at least one of the foregoing content.

For descriptions of the frequency range of the downlink carrier, the frequency band of the downlink carrier, the frequency range of the uplink carrier, the frequency band of the uplink carrier, the frequency range of the downlink bandwidth part, the frequency range of the uplink bandwidth part, the first downlink data channel transmission configuration, the first uplink data channel transmission configuration, and the modification duration of the first common configuration, refer to related descriptions of the first configuration in Manner 1. Details are not described herein again.

For descriptions of the first common configuration including the transmission configuration of the system information, the downlink control channel configuration associated with the system information, the configuration of the paging control channel, or the downlink control information configuration associated with the paging control channel, refer to related descriptions of the third configuration in Manner 1. Details are not described herein again.

In Manner 2, uplink carriers corresponding to the M cells are the same, or downlink carriers corresponding to the M cells are the same. Because the M cells include the first cell and the N cells, the N cells and the first cell correspond to a same uplink carrier and/or a same downlink carrier; or an uplink carrier that needs to be used by the terminal for communication in any one of the N cells is the same as an uplink carrier that needs to be used by the terminal for communication in the first cell, and/or a downlink carrier that needs to be used by the terminal for communication in any one of the N cells is the same as a downlink carrier that needs to be used by the terminal for communication in the first cell.

In Manner 2, optionally, the method shown in FIG. 4 further includes S4031: The terminal sends a first signal in a second cell in the N cells.

For descriptions of the first signal, refer to the related descriptions in S403. Details are not described herein again.

In Manner 2, because the M cells include the first cell, and the terminal can also learn of a part of cell configurations of the first cell, the terminal may access the first cell, or may access the second cell in the M cells.

For example, when a reference signal received power (reference signal received power, RSRP) of a common reference signal of the first cell is less than a first threshold, the terminal accesses the second cell in the M cells. When an RSRP of a common reference signal of the first cell is greater than a second threshold, the terminal accesses the first cell. The second threshold is greater than or equal to the first threshold.

For another example, downlink signals may be sent in the N cells of the M cells, and the downlink signals are used by the terminal to measure RSRPs of the N cells. The terminal may determine, based on an RSRP of a common reference signal of the first cell and the RSRPs of the downlink signals of the N cells of the M cells, to access the first cell or the second cell in the N cells. When the RSRP of the common reference signal of the first cell is greater than an RSRP of a downlink signal of the second cell, the terminal accesses the first cell; or when the RSRP of the common signal of the first cell is less than an RSRP of a downlink signal of the second cell, the terminal accesses the second cell. Optionally, the downlink signal may include a PSS and an SSS.

In Manner 2, the M cells may correspond to a same network device, or may respectively correspond to M different network devices, or may correspond to K network devices, where K is less than M.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 5 and FIG. 6 are diagrams of structures of possible communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminals 70a to 70j shown in FIG. 1, or may be the base station 60a or 60b shown in FIG. 1, or may be a module (such as a chip) used in the terminal or the network device.

As shown in FIG. 5, a communication apparatus 500 includes a processing unit 510 and a transceiver unit 520. The communication apparatus 500 is configured to implement the function of the terminal or the base station in the method embodiment shown in FIG. 4.

When the communication apparatus 500 is configured to implement the function of the terminal in the method embodiment shown in FIG. 4, the transceiver unit 520 is configured to receive a first configuration and a second configuration. The processing unit 510 is configured to determine cell configurations of N cells based on the first configuration and the second configuration.

In an optional manner, the transceiver unit 520 is further configured to receive a third configuration.

In an optional manner, the transceiver unit 520 is further configured to send a first signal to a second cell.

For more detailed descriptions about the processing unit 510 and the transceiver unit 520, refer directly to related descriptions in the method embodiment shown in FIG. 4. Details are not described herein again.

When the communication apparatus 500 is configured to implement the function of the network device in the method embodiment shown in FIG. 4, the transceiver unit 520 is configured to send a first configuration and a second configuration. The processing unit 510 may be optional. When the communication apparatus 500 includes the processing unit 510, in an optional manner, the processing unit 510 may be configured to determine the first configuration and the second configuration.

For more detailed descriptions about the processing unit 510 and the transceiver unit 520, refer directly to related descriptions in the method embodiment shown in FIG. 4. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to: store instructions executed by the processor 610, store input data needed by the processor 610 to run instructions, or store data generated after the processor 610 runs instructions.

When the communication apparatus 600 is configured to implement the method shown in FIG. 5, the processor 610 is configured to implement the functions of the processing unit 510, and the interface circuit 620 is configured to implement the functions of the transceiver unit 520.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiment. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in the base station or the terminal. The processor and the storage medium may exist in the base station or the terminal as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a first configuration and a second configuration in a first cell, wherein the first configuration comprises first common configurations of M cells, the second configuration comprises dedicated configurations of N cells, the N cells are N cells of the M cells, the N cells do not comprise the first cell, both M and N are positive integers, and M is greater than or equal to N;
and
determining cell configurations of the N cells based on the first configuration and the second configuration.

2. The method according to claim 1, wherein the M cells are the N cells.

3. The method according to claim 2, wherein the first common configuration comprises at least one of the following:
a frequency range of a downlink carrier;
a frequency band of the downlink carrier;
a frequency range of an uplink carrier;
a frequency band of the uplink carrier;
a frequency range of a downlink bandwidth part, wherein the frequency range of the downlink bandwidth part is comprised in the frequency range of the downlink carrier;
a frequency range of an uplink bandwidth part, wherein the frequency range of the uplink bandwidth part is comprised in the frequency range of the uplink carrier;
a first downlink data channel transmission configuration, wherein the first downlink data channel transmission configuration comprises a common downlink data transmission configuration for all user equipments UEs in the M cells;
a first uplink data channel transmission configuration, wherein the first uplink data signal transmission configuration comprises a common uplink data transmission configuration for all the UEs in the M cells;
uplink and downlink time domain resources, wherein the uplink and downlink time domain resources comprise an uplink time domain resource and a downlink time domain resource; or
modification duration of the first common configuration, wherein the modification duration is duration between a first time unit and a second time unit, the first time unit is a time unit at which change indication information of the first common configuration is received, and the second time unit is a time unit that is after the first time unit and in which the first common configuration is updated for the first time.

4. The method according to claim 2 or 3, wherein the dedicated configuration comprises at least one of the following:
a configuration of a random access channel;
a downlink control channel configuration associated with the random access channel; or
a physical cell identifier PCI.

5. The method according to any one of claims 2 to 4, wherein the method further comprises: receiving a third configuration in the first cell, wherein the third configuration comprises second common configurations of the M cells and the first cell; or the third configuration comprises second common configurations of the M cells, and the second common configuration comprises at least one of the following:
a transmission configuration of system information;
a downlink control channel configuration associated with the system information;
a configuration of a paging control channel; or
a downlink control channel configuration associated with the paging control channel.

6. The method according to claim 5, wherein at least one of the first configuration, the second configuration, or the third configuration is carried in system information of the first cell; or at least one of the first configuration, the second configuration, or the third configuration is carried in first information, the first information is scheduled by using first indication information, and the first indication information is comprised in system information of the first cell or downlink control information of the first cell.

7. The method according to claim 1, wherein the M cells comprise the N cells and the first cell.

8. The method according to claim 7, wherein the first common configuration comprises at least one of the following:
a frequency range of a downlink carrier;
a frequency band of the downlink carrier;
a frequency range of an uplink carrier;
a frequency band of the uplink carrier;
a frequency range of a downlink bandwidth part, wherein the frequency range of the downlink bandwidth part is comprised in the frequency range of the downlink carrier;
a frequency range of an uplink bandwidth part, wherein the frequency range of the uplink bandwidth part is comprised in the frequency range of the uplink carrier;
a first downlink data channel transmission configuration, wherein the first downlink data channel transmission configuration is a common downlink data channel transmission configuration for all users in the M cells;
a first uplink data channel transmission configuration, wherein the first uplink data signal transmission configuration is a common uplink data channel transmission configuration for all the users in the M cells;
uplink and downlink time domain resources, wherein the uplink and downlink time domain resources comprise an uplink time domain resource and a downlink time domain resource; or
modification duration of the first common configuration, wherein the modification duration is a time period between a first time unit and a second time unit, the first time unit is a time unit at which change indication information of the first common configuration is received, the first indication information indicates a configuration of the first common configuration changes, and the second time unit is a time unit that is after the first time unit and in which the first common configuration is updated for the first time;
a transmission configuration of system information;
a downlink control channel configuration associated with the system information;
a configuration of a paging control channel;
a downlink control channel configuration associated with the paging control channel.

9. The method according to claim 7 or 8, wherein the dedicated configuration comprises at least one of the following:
a configuration of a random access channel;
a downlink control channel configuration associated with the random access channel; or
a physical cell identifier PCI.

10. The method according to any one of claims 7 to 9, wherein at least one of the first configuration or the second configuration is carried in system information of the first cell; or at least one of the first configuration or the second configuration is carried in first information, the first information is scheduled by using first indication information, and the first indication information is carried in system information of the first cell or downlink control information of the first cell.

11. The method according to any one of claims 1 to 10, wherein a first signal is sent in one of the N cells, and the first signal is used for triggering a random access procedure.

12. A communication method, wherein the method comprises:
sending a first configuration and a second configuration in a first cell, wherein the first configuration comprises first common configurations of M cells, the second configuration comprises dedicated configurations of N cells, the N cells are N cells of the M cells, and the N cells do not comprise the first cell.

13. The method according to claim 12, wherein the M cells are the N cells.

14. The method according to claim 13, wherein the first common configuration comprises at least one of the following:
a frequency range of a downlink carrier;
a frequency band of the downlink carrier;
a frequency range of an uplink carrier;
a frequency band of the uplink carrier;
a frequency range of a downlink bandwidth part, wherein the frequency domain range of the downlink bandwidth part is comprised in the frequency domain range of the downlink carrier;
a frequency range of an uplink bandwidth part, wherein the frequency domain range of the uplink bandwidth part is comprised in the frequency domain range of the uplink carrier;
a first downlink data channel transmission configuration, wherein the first downlink data channel transmission configuration comprises a common downlink data transmission configuration for all UEs in the M cells;
a first uplink data channel transmission configuration, wherein the first uplink data signal transmission configuration comprises a common uplink data transmission configuration for all the UEs in the M cells;
uplink and downlink time domain resources, wherein the uplink and downlink time domain resources comprise an uplink time domain resource and a downlink time domain resource; or
modification duration of the first common configuration, wherein the modification duration is time between a first time unit and a second time unit, the first time unit is a time unit at which change indication information of the first common configuration is received, and the second time unit is a time unit that is after the first time unit and in which the first common configuration is updated for the first time.

15. The method according to claim 13 or 14, wherein
the dedicated configuration comprises at least one of the following:
a configuration of a random access channel;
a downlink control channel configuration associated with the random access channel; or
a physical cell identifier PCI.

16. The method according to any one of claims 13 to 15, wherein the method further comprises: sending a third configuration in the first cell, wherein the third configuration comprises second common configurations of the M cells and the first cell; or the third configuration comprises second common configurations of the M cells, and the second common configuration comprises at least one of the following:
a transmission configuration of system information;
a downlink control channel configuration associated with the system information;
a configuration of a paging control channel; or
a downlink control channel configuration associated with the paging control channel.

17. The method according to claim 16, wherein at least one of the first configuration, the second configuration, or the third configuration is carried in system information of the first cell; or at least one of the first configuration, the second configuration, or the third configuration is carried in first information, the first information is scheduled by using first indication information, and the first indication information is carried in system information of the first cell or downlink control information of the first cell.

18. The method according to claim 17, wherein the M cells comprise the N cells and the first cell.

19. The method according to claim 18, wherein the first common configuration comprises at least one of the following:
a frequency range of a downlink carrier;
a frequency band of the downlink carrier;
a frequency range of an uplink carrier;
a frequency band of the uplink carrier;
a frequency range of a downlink bandwidth part, wherein the frequency range of the downlink bandwidth part is comprised in the frequency range of the downlink carrier;
a frequency range of an uplink bandwidth part, wherein the frequency range of the uplink bandwidth part is comprised in the frequency range of the uplink carrier;
a first downlink data channel transmission configuration, wherein the first downlink data channel transmission configuration is a common downlink data channel transmission configuration for all users in the M cells;
a first uplink data channel transmission configuration, wherein the first uplink data signal transmission configuration is a common uplink data channel transmission configuration for all the users in the M cells;
uplink and downlink time domain resources, wherein the uplink and downlink time domain resources comprise an uplink time domain resource and a downlink time domain resource; or
modification duration of the first common configuration, wherein the modification duration is a time period between a first time unit and a second time unit, the first time unit is a time unit at which change indication information of the first common configuration is received, and the second time unit is a time unit that is after the first time unit and in which the first common configuration is updated for the first time;
a transmission configuration of system information;
a downlink control channel configuration associated with the system information;
a configuration of a paging control channel;
a downlink control channel configuration associated with the paging control channel.

20. The method according to claim 18 or 19, wherein the dedicated configuration comprises at least one of the following:
a configuration of a random access channel;
a downlink control channel configuration associated with the random access channel; or
a physical cell identifier PCI.

21. The method according to any one of claims 18 to 20, wherein at least one of the first configuration or the second configuration is carried in system information of the first cell; or the second configuration is carried in first information, the first information is scheduled by using first indication information, and the first indication information is comprised in one of the following: system information of the first cell or downlink control information of the first cell.

22. The method according to any one of claims 12 to 21, wherein a first signal is received in one of the N cells, and the first signal is used for triggering a random access procedure.

23. A communication apparatus, comprising at least one processor and an interface circuit, wherein the interface circuit is configured to receive a signal from a communication apparatus other than the communication apparatus and transmit the signal to the processor, or send a signal from the at least one processor to a communication apparatus other than the communication apparatus, and the at least one processor is configured to implement the method according to any one of claims 1 to 11 or the method according to any one of claims 12 to 22 by using a logic circuit or by executing code instructions.

24. A computer-readable storage medium, wherein the computer-readable storage medium stores instructions, and when the instructions are executed, the method according to any one of claims 1 to 11 or the method according to any one of claims 12 to 22 is implemented.

25. A computer program product, wherein the computer program product comprises a computer program, and when the computer program is run, the method according to any one of claims 1 to 11 is performed, or the method according to any one of claims 12 to 22 is performed.
